# EUROPEAN PATENT APPLICATION

(11) **EP 4 177 277 A1**
(43) Date of publication of application: **10.05.2023**
(21) Application number: 21847330.4
(22) Date of filing: 16.07.2021
(51) Int. Cl.: C08F 6/00, C08F 14/06, C08F 2/18, C08F 2/22, B01D 3/14

(54) **APPARATUS FOR REMOVING RESIDUAL MONOMERS**

(30) Priority: 22.07.2020 KR 20200090868
(71) Applicant: Hanwha Solutions Corporation, Jung-gu Seoul 04541 (KR)
(72) Inventor: LIM, Dongwook, Daejeon 34128 (KR); LEE, Shinbeom, Daejeon 34128 (KR); SONG, Junhye, Daejeon 34128 (KR); AHAN, Wooyoul, Daejeon 34128 (KR); JEON, Hyojin, Daejeon 34128 (KR); HAN, Keedo, Daejeon 34128 (KR)
(74) Representative: Thoma, Michael
(86) International application number: PCT/KR2021/009169
(87) International publication number: WO 2022/019574

(57) **Abstract**

The present disclosure relates to an apparatus for removing residual monomers and, more specifically, to an apparatus for removing residual monomers, the apparatus being capable of preventing, during the removal of volatile materials by supplying a gas to a flowing distillation material, the formation of dead zones in which the distillation material does not flow or the flow rate thereof decreases. The apparatus for removing residual monomers, of the present disclosure, comprises: a main body capable of supplying a gas to a distillation material accommodated therein; distillation material supply part which is provided at the upper part of the main body and through which the distillation material is injected; a gas inflow part which is provided at the lower part of the main body and through which the gas is injected; a discharge part which is provided at the upper part of the main body, and which discharges volatile materials separated, by means of the gas, from the distillation material; a recovery part, which is provided at the lower part of the main body and recovers the distillation material from which the volatile materials have been removed; a plurality of trays which are provided inside the main body, and each of which has through-holes and a spiral channel; and a downcomer which is provided between the trays, and which is a moving passage through which the distillation material moves downward from the upper part of the main body.

## Description

### [Technical Field]

The present disclosure relates to an apparatus for removing residual monomers and, more specifically, to an apparatus for removing residual monomers capable of preventing, during the removal of volatile materials by supplying a gas to a flowing distillation material, the formation of dead zones in which the distillation material does not flow or the flow rate thereof decreases.

### [Background Art]

PVC is generally prepared by suspension polymerization, emulsion polymerization or bulk polymerization, but is usually prepared by the suspension polymerization and the emulsion polymerization, which have the advantages that the heat of reaction may be easily removed and a product of high purity may be obtained.

In the suspension polymerization and the emulsion polymerization, generally, a vinyl chloride monomer (VCM) and a polymerization initiator together with an aqueous medium, a dispersant, and an emulsifier are injected into a polymerization vessel equipped with an agitator and are stirred, and the temperature inside the polymerization vessel is maintained to polymerize the VCM.

In this case, in general, the polymerization reaction does not continue until all the VCM is converted into PVC, and terminates at a polymerization conversion rate with high production efficiency. After termination, the residual monomers in the polymerization vessel are separated from the PVC slurry through a removal device and then recovered.

In the conventional removal device, various methods have been proposed for completely removing the VCM formed during the polymerization reaction or reducing the VCM content to an extent harmless to environmental hygiene.

In particular, the method and apparatus for removing residual monomers disclosed in Korean Patent Publication No. 10-0505907 include a perforated plate (tray) provided with a partition wall forming a zigzag PVC slurry channel.

However, when the PVC slurry flows along the channel formed by the zigzag partition walls in the tray having this structure, the flow rate of the flowing PVC slurry decreases or a dead zone in which the PVC slurry does not flow is formed as the PVC slurry collides with the partition wall near the corner. As a result, as solids of the slurry are precipitated and the hole through which the gas is supplied is closed, the contact between the slurry and the gas may not occur, the production efficiency may decrease, and the quality of the produced PVC may decrease.

In addition, as the PVC slurry collides with the partition wall near the corner, a large amount of foam is generated in the PVC slurry, and a gas-liquid contact area in which the PVC slurry and the gas come into contact with each other decreases, so the efficiency of the process may further decrease and the inside of the device may be contaminated.

### [Disclosure]

### [Technical Problem]

An object of the present disclosure provides an apparatus for removing residual monomers capable of preventing, during the removal of volatile materials by supplying a gas to a flowing distillation material, the formation of dead zones in which the distillation material does not flow or the flow rate thereof decreases.

### [Technical Solution]

In one general aspect, an apparatus for removing residual monomers includes: a main body capable of supplying a gas to a distillation material accommodated therein; a distillation material supply part which is provided at the upper part of the main body and through which the distillation material is injected; a gas inflow part which is provided at the lower part of the main body and through which the gas is injected; a discharge part which is provided at the upper part of the main body and discharges volatile materials separated, by means of the gas, from the distillation material; a recovery part, which is provided at the lower part of the main body and recovers the distillation material from which the volatile materials have been removed; a plurality of trays which are provided inside the main body, and each of which has through-holes and a spiral channel; and a downcomer which is provided between the trays and is a moving passage through which the distillation material moves downward from an upper part of the main body.

The tray may include a disk-shaped body which is located in a direction dividing the inside of the main body into upper and lower parts, and a spiral baffle which is located on an upper surface of the main body, and rotates and extends from a central portion to an edge of the body part to form a spiral channel.

The downcomer may be located at the edge of the tray or the center of the tray, and the position may be alternated along a height direction of the main body.

A width of the spiral channel may be constant.

The supply part may be formed in plurality to disperse and inject the distillation material.

The supply parts may be spaced apart from each other at equal intervals along an inner circumference of the main body.

The plurality of trays may be spaced apart from each other at equal intervals along the height direction of the main body.

In another general aspect, a method of removing residual monomers through the apparatus for removing residual monomers includes: supplying a gas to the distillation material to generate a distillation material from which a gaseous phase containing volatile materials and the volatile materials are removed; and removing, from the main body, the gaseous phase and the distillation material from which the volatile materials are removed.

The distillation material may include a polymerization product of suspension polymerization or emulsion polymerization.

The distillation material may include a distillable vinyl chloride monomer (VCM).

### [Advantageous Effects]

The apparatus for removing residual monomers according to the present disclosure includes a tray provided with a spiral channel to prevent the formation of a dead zone in which a distillation material does not flow or a flow rate decreases, and the formation of foam that reduces a gas-liquid contact area, thereby maintaining excellent process efficiency.

### [BRIEF DESCRIPTION OF THE DRAWINGS]

FIG. 1 is a partially cut-away perspective view illustrating an apparatus for removing residual monomers according to an embodiment of the present disclosure.
FIG. 2 is a plan view illustrating a main part of the apparatus for removing residual monomers illustrated in FIG. 1.
FIG. 3 is a partially cut-away side view of the apparatus for removing residual monomers illustrated in FIG. 1.
FIG. 4 is an image illustrating internal computational fluid dynamics (CFD) calculation results of the apparatus for removing residual monomers illustrated in FIG. 1 and the conventional apparatus for removing residual monomers.
FIG. 5 is a plan view illustrating a main part of an apparatus for removing residual monomers according to another embodiment of the present disclosure.

### [Best Mode]

Technical terms and scientific terms used herein have the general meaning understood by those skilled in the art to which the present disclosure pertains unless otherwise defined, and a description for the known function and configuration unnecessarily obscuring the gist of the present disclosure will be omitted in the following description and the accompanying drawings.

Also, the singular forms used in the specification are intended to include the plural forms as well, unless the context specifically dictates otherwise.

"Including" mentioned herein is an open-ended description having an equivalent meaning to expressions such as "comprising," "containing," "having," "characterizing," and elements, materials, or processes not listed additionally are not excluded.

The apparatus for removing residual monomers of the present disclosure is for removing volatile materials by supplying a gas to the distillation material, and includes a main body, a supply part, a gas inflow part, a discharge part, a recovery part, a tray with a spiral channel, and a downcomer.

Conventionally, a zigzag channel is formed on an upper surface of the tray of the apparatus for removing residual monomers by a partition wall, and the distillation material flows along the formed channel. Accordingly, as the distillation material collides with the partition wall near a corner of a channel, a flow rate of the flowing distillation material decreases or a dead zone in which no flow occurs is formed. As a result, the solids of the distillation material are precipitated and the hole through which the gas is supplied is closed, and the distillation material and the gas do not come into contact with each other, so that the volatile materials are not sufficiently removed, resulting in a decrease in production efficiency and a decrease in the quality of the produced PVC.

However, the apparatus for removing residual monomers of the present disclosure includes a tray provided with a spiral channel to make the distillation material flow in a spiral shape on the upper surface of the tray in order to make the distillation material flow at a constant flow rate in front of the channel, thereby preventing the formation of the dead zone in which no flow occurs or the formation of the foam that reduces the gas-liquid contact area. Accordingly, it is possible to maintain the excellent process efficiency.

Hereinafter, an apparatus for removing residual monomers according to an embodiment of the present disclosure will be described in detail with reference to the accompanying drawings. The accompanying drawings are provided by way of example in order to sufficiently transfer the spirit of the present disclosure to those skilled in the art, and the present disclosure is not limited to the accompanying drawing provided below, but may be implemented in another form.

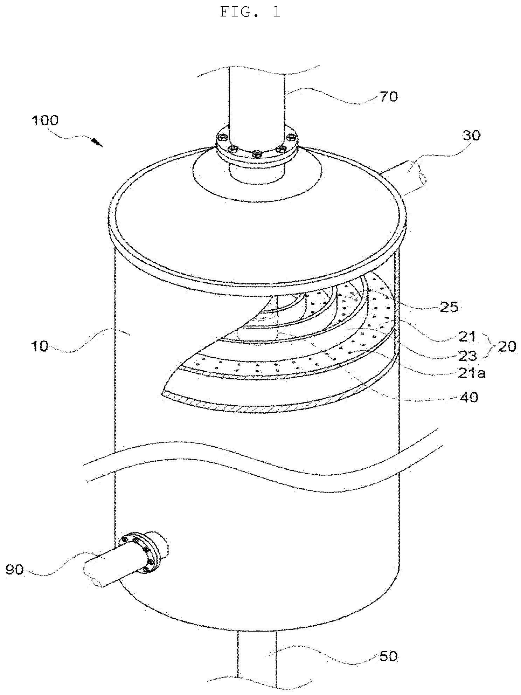

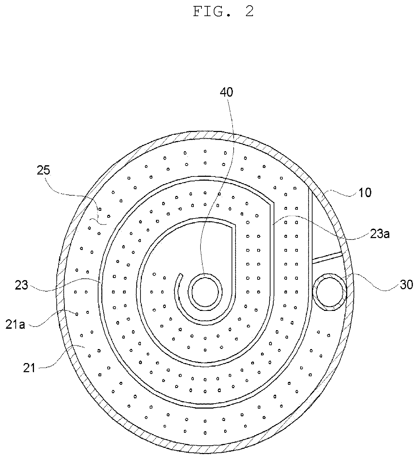

FIGS. 1 to 3 illustrate an apparatus 100 for removing residual monomers according to an embodiment of the present disclosure.

Referring to FIGS. 1 to 3, the apparatus 100 for removing residual monomers of the present disclosure is for removing residual monomers of a polymer slurry by supplying gas from a distillation material, and may be, a specific example, a VCM stripper for removing volatile materials containing a vinyl chloride monomer (VCM), but is not limited thereto. The apparatus 100 for removing residual monomers of the present disclosure includes a main body 10, a supply part 30, a gas inflow part 50, a discharge part 70, a recovery part 90, a tray 20 provided with a spiral channel 25, and a downcomer 40.

In the present disclosure, the distillation material means a form in which residual solvent and distillable monomers exist inside polymer powder obtained from suspension polymerization and emulsion polymerization, and may mean, for example, a suspension polymer (PVC slurry) containing a distillable VCM therein after the suspension polymerization of polyvinyl chloride (PVC). PVC is exemplified as the suspension polymerization or the emulsion polymerization, but is not limited thereto.

In addition, in the present disclosure, the gas is for vaporization of the residual monomers and residual solvents, and may be gas or vapor, and specifically, may be water vapor.

The main body 10 provides an accommodation space capable of supplying a gas to the distillation material accommodated therein, and may be provided as a cylindrical chamber as illustrated in the drawing, but is not limited as long as it has a structure capable of forming an accommodation space. The main body 10 is installed vertically on the ground, and the main body 10 accommodates a plurality of trays 20 and downcomers 40 therein. The inside of the main body 10 may be partitioned vertically by the tray 20. In the main body 10, the distillation material inflows from the upper part of the main body 10 and gas inflows from the lower part of the main body 10.

The supply part 30 is a pipe which is provided at the upper part of the main body 10 and into which the distillation material is injected. As the distillation material is supplied into the main body 10 through the supply part 30 provided at the upper part of the main body 10, the distillation material moves with a flow rate by gravity. Specifically, the supply part 30 is provided at the upper part of the main body 10 than the top tray 20, and thus, the injected distillation material may be moved to the upper surface of the top tray 20.

The gas inflow part is a pipe or tube into which gas is injected, and is provided at the lower part of the main body 10 opposite to an inflow direction of the distillation material. As the gas inflow part 50 is provided at the lower part of the main body 10, the gas rises upward from the lower part inside the main body 10.

The discharge part 70 is provided at the upper part of the main body 10, and may be a pipe or tube through which volatile materials separated from the distillation material by the gas are discharged. Specifically, the volatile materials discharged through the discharge part 70 may be the residual solvents and distillable monomers contained in the distillation material.

The recovery part 90 may be a pipe or a tube which is provided at the lower part of the main body and recovers the distillation material from which the volatile materials are removed. Specifically, the distillation material from which the volatile materials discharged through the recovery part 90 are removed may be high-purity PVC from which the residual solvent and distillable monomers are removed.

The tray 20 is provided inside the main body 10 in plurality, each of which has through-holes 21a, and an upper surface thereof is provided with a spiral channel. Specifically, the tray 20 has a disk-shaped body 21 which is located in a direction dividing the inside of the main body 10 into upper and lower parts, and a spiral baffle 23 which is located on an upper surface of the disk-shaped body 21 to form the spiral channel.

As such a plurality of trays 20 are provided inside the main body 10, the inside of the main body 10 may be partitioned into multiple layers. More specifically, the trays 20 may be spaced apart from each other at equal intervals along the height direction of the main body 10 perpendicular to the ground. In this way, in the trays 20 arranged at equal intervals, assuming that a tray 20 located at the upper part of the trays 20 arbitrarily adjacent to each other is referred to as an upper tray 20, and a tray 20 located at the lower part thereof is referred to as a lower tray 20, as a height moved from the upper tray 20 to the lower tray 20 is the same, the flow rate of the distillation material determined by potential energy may be the same in each layer formed by each tray 20. Accordingly, the flow rate of the distillation material inside the main body 10 may be easily controlled during the process design. As illustrated in the drawing, in the top tray 20, the supply part 30 may be located at the edge and the downcomer 40 may be located at the center, but otherwise, the supply part 30 may be located at the center and the downcomer 40 may be located at the edge.

The body 21 of the tray 20 may be provided with a plurality of through-holes 21a penetrating upward and downward of the main body. The through-hole 21a may be formed over the entire surface of the body 21, and preferably, the distillation material may be intensively arranged on a moving path, that is, on a bottom surface of the spiral channel 25. In this case, a spiral pattern corresponding to the spiral channel 25 may be formed on the lower surface of the body 21 due to the through-hole 21a. A diameter of the through-hole 21a perforated in the body 21 may be 10 mm or less, preferably 1 to 5 mm, and more preferably 1 to 3 mm, but is not limited thereto. An aperture ratio (total through-hole area/area of upper surface of body) of the body 21 may be 0.01 to 30% and preferably 0.02 to 10%, but is not limited thereto.

The spiral baffle 23 rotates and extends from the center to the edge of the body 21 to form the spiral channel 25, and the distillation material may be spirally formed on the upper surface of the tray 20 by the spiral baffle 23. The spiral baffle 23 may rotate and extend at various angles to form various widths of the spiral channel 25 on the upper surface of the body 21 of the tray 20, but may preferably rotate and extend so that the width of the spiral channel 25 is constant along the extension direction of the spiral baffle 23. In such a spiral baffle 23, as the spiral channel 25 is formed to have a certain width, a certain amount of distillation material may flow through the channel. Thus, the flux of the distillation material may be easily controlled during the process design.

As illustrated in the drawing, the spiral baffle 23 rotates and extends in a curved shape to form the spiral channel 25, and may include an acceleration section 23a which extends in a straight line from a part of the upper surface of the body 21 of the tray 20 and in which a portion of the spiral channel 25 is formed in a straight line. The acceleration section 23a is formed in a fan-shaped area with a center angle of 10° to 90°, preferably 20° to 80°, and more preferably 30° to 60° with respect to the center of the tray 20. As the acceleration section 23a is formed in the fan-shaped area, it is possible to further prevent the flow rate of the distillation material from decreasing due to the friction generated during the flow, the contact with the gas supplied from the through-hole 21a of the body 21, and the like.

The downcomer 40 is provided between the trays 20 and is a moving passage through which the distillation material moves from the top to the bottom of the main body 10. Assuming that the tray 20 located at the upper part of the trays 20 adjacent to each other is referred to as the upper tray 20, and the tray 20 located at the lower part thereof is referred to as the lower tray 20, the downcomer 40 may be located between the upper tray 20 and the lower tray 20 to move the distillation material flowing in the upper tray 20 to the lower tray 20. As the trays 20 are provided in plurality, the downcomer 40 may be provided in plurality. In this case, the downcomer 40 is located at the edge of the tray 20 or at the center of the tray 20, but the position may be alternated along the height direction of the main body 10.

Specifically, when numbering the downcomers 40 sequentially from the top to the bottom of the body, an n^{th} downcomer 40 may extend downward from an edge of an n^{th} tray 20 to move the distillation material to an upper surface of an edge of an n+1^{th} tray 20. In addition, the n + 1^{th} downcomer 40 extends downward from the center of the n + 1^{th} tray 20 to move the distillation material to an upper surface of a center of an n + 2^{th} tray 20. As such, the distillation material supplied onto the tray 20 through the downcomer 40 may flow along the spiral channel 25 and then move to the next tray 20 located at the lower part through the next downcomer 40.

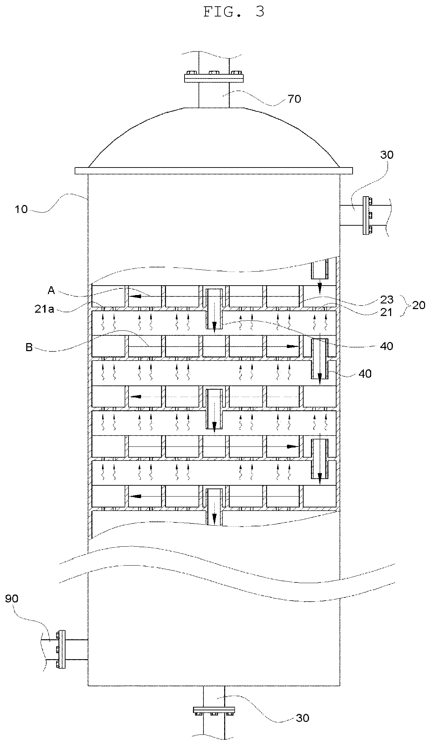

Hereinafter, the operation of the apparatus 100 for removing residual monomers according to an embodiment of the present disclosure will be described in detail with reference to FIG. 3.

Referring to FIG. 3, the distillation material is supplied to the inside of the main body 10 through the supply part 30. The supplied distillation material is supplied to the upper part of the tray 20 located at the top, and rotates in a first direction A along the spiral channel 25 and moves from the edge to the center of the tray 20. The moving distillation material is supplied to the center of the upper part of the tray 20 of the next layer through the top downcomer 40.

The supplied distillation material rotates in a second direction B along the spiral channel 25 and moves from the center to the edge of the tray 20. In the drawing, the first and second directions A and B are opposite to each other, but, unlike this, may of course rotate in the same direction.

In this way, the distillation material moves from the upper part to the lower part of the main body 10 along the tray 20 and the downcomer 40. When the distillation material moves along the spiral channel 25 on the upper part of the tray 20, the gas supplied from the gas inflow part is supplied to the distillation material through the through-hole 21a formed in the body 21 of the tray 20. The volatile materials are separated from the distillation material by the supplied gas, and the volatile materials are discharged through the discharge part 70 provided at the upper part of the main body 10. The volatile materials are gradually removed from the upper part to the lower part of the tray 20, and the high-purity final product from which the volatile materials are removed is discharged from the main body 10 through the recovery part 90 provided at the lower part of the main body 10.

In the apparatus 100 for removing residual monomers of the present disclosure, as the distillation material flows in a spiral shape on the upper surface of the tray 20 through the spiral channel 25, the distillation material flows at a constant flow rate in front of the channel, thereby preventing the formation of the dead zone in which the distillation material does not flow or a flow rate decreases and the formation of the foam that reduces the gas-liquid contact area.

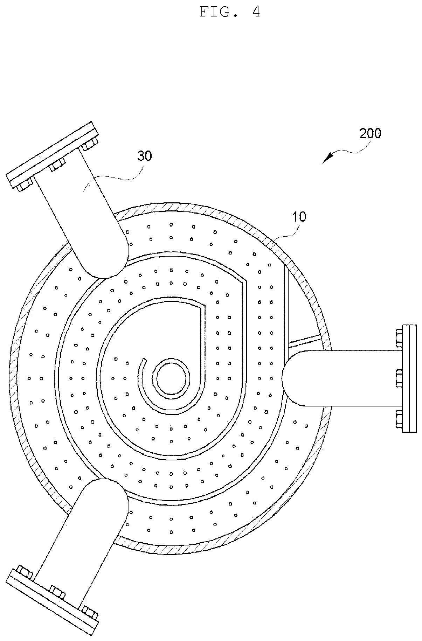

FIG. 4 is a diagram visually imaging a result of calculating internal computational fluid dynamics (CFD) of the conventional zigzag channel and the spiral channel of the present disclosure.

Referring to FIG. 4, it could be seen that in the conventional channel, a blue dead zone, in which fluid hardly flows, is formed around a corner, but in the spiral channel 25 of the present disclosure, the fluid is constantly flowing without forming a dead zone as a whole.

That is, the apparatus 100 for removing residual monomers of the present disclosure may stably flow the distillation material as the spiral channel 25 is formed, thereby preventing the decrease in process efficiency, the failure of the device, or the like due to the precipitation. In addition, as the distillation material flows smoothly, even when the distillation material is supplied at a high flow rate to increase the process rate, it is possible to prevent the retention of the distillation material and the decrease in flow rate. In addition, as the fluid may be moved without great friction, the generation rate of bubbles is greatly reduced, so the process efficiency may further increase.

In addition, as illustrated in FIG. 5, the apparatus for removing residual monomers of the present disclosure may be provided with a plurality of supply parts 30.

In an apparatus 200 for removing residual monomers according to another embodiment of the present disclosure, the supply part 30 may be formed in plurality to disperse and inject the distillation material. In detail, the plurality of supply parts 30 may be spaced apart from each other at equal intervals along the inner circumference of the main body 10, and the distillation material may be discharged at the same flux from each of the supply part. As the distillation material flow rate discharged from a single supply part 30 is reduced in inverse proportion to the number of supply parts 30, the pressure difference between the supply part 30 and the main body 10 decreases, so it is possible to prevent the foam from occurring due to the pressure difference. The apparatus 200 for removing residual monomers of the present disclosure as described above may further prevent the formation of foam, thereby maximizing the effect of increasing process efficiency.

The present disclosure relates to a method of removing residual monomers through the above-described apparatus for removing residual monomers, in which the method may include injecting the distillation material into the main body; supplying a gas to the distillation material to generate a distillation material from which a gaseous phase containing volatile materials and the volatile materials are removed; and removing, from the main body, the distillation material from which the gaseous phase and the volatile materials are removed.

In the present disclosure, the distillation material includes a polymerization product of suspension polymerization or emulsion polymerization, and may include, in detail, a suspension polymerization product or emulsion polymerization product of PVC. Examples of polymerizable monomers that react with VCM for polymerization may include, but are not limited thereto, carboxylic acid ester (e.g., vinyl acetate) of vinyl alcohol, vinyl ether (e.g., alkylvinyl ether), unsaturated carboxylic acid esters (e.g., acrylate and methacrylate), vinylidene halide (e.g., vinylidene chloride and vinylidene fluoride), unsaturated nitrile (e.g., acrylonitrile), and olefin (e.g., ethylene and propylene).

In the present disclosure, the distillation material may be referred to as a liquid dispersion (PVC slurry) that contains an aqueous medium containing preferably PVC that has undergone a polymerization reaction, an unreacted residual monomer (VCM) and an aqueous medium mainly containing water, and, if necessary, may contain a small amount of dispersing agent such as polyvinyl alcohol or hydroxypropylmethyl cellulose, in addition to a buffer, a particle size control agent, a scale adhesion inhibitor, an antifoaming agent, and the like.

In detail, in the step of injecting the distillation material into the main body, the slurry concentration of the distillation material, that is, the PVC slurry concentration, is preferably 5 to 50 wt%, and more preferably 10 to 40 wt%. When the concentration of the distillation material exceeds 50 wt%, fluidity greatly decreases, and when the concentration is less than 5 wt%, the removal efficiency of residual monomers may significantly decrease.

In the step of supplying the gas to the distillation material to generate the distillation material from which the gaseous phase containing the volatile materials and the volatile materials are removed, the ejection amount of gas may be preferably 1 to 100 kg/h and more preferably 5 to 50 kg/h per 1 m³ of the area formed by the distillation material, but is not limited thereto. In this case, the temperature and ejection amount of gas may be adjusted so that the temperature of the distillation material flowing on the top tray is 50 to 150°C, specifically 70 to 120°C, and more specifically 80 to 110°C, but is not limited thereto.

In the step of removing, from the main body, the distillation material from which the gas phase and the volatile materials are removed, the volatile materials are discharged through the discharge part and the distillation material from which the volatile materials are removed is discharged to the recovery part. The distillation material from which the volatile materials are removed may be high-purity PVC from which the VCM is removed. As such, the method of removing residual monomers through the above-described apparatus for removing residual monomers has excellent process efficiency and may produce a high-purity product.

Hereinabove, although the present disclosure has been described by specific matters, limited embodiments, and the accompanying drawings, they have been provided only for assisting in the entire understanding of the present disclosure. Therefore, the present disclosure is not limited to the exemplary embodiments. Various modifications and changes may be made by those skilled in the art to which the present disclosure pertains from this description.

Therefore, the spirit of the present disclosure should not be limited to these exemplary embodiments, but the claims and all of modifications equal or equivalent to the claims are intended to fall within the scope and spirit of the present disclosure.

## Claims

1. An apparatus for removing residual monomers, comprising:
a main body capable of supplying a gas to a distillation material accommodated therein;
a distillation material supply part which is provided at the upper part of the main body and through which the distillation material is injected;
a gas inflow part which is provided at the lower part of the main body and through which the gas is injected;
a discharge part which is provided at the upper part of the main body and discharges volatile materials separated by the gas, from the distillation material;
a recovery part, which is provided at the lower part of the main body and recovers the distillation material from which the volatile materials have been removed;
a plurality of trays which are provided inside the main body, and each of which has through-holes and a spiral channel; and
a downcomer which is provided between the trays, and which is a moving passage through which the distillation material moves downward from an upper part of the main body.

2. The apparatus of claim 1, wherein the tray includes a disk-shaped body which is located in a direction dividing the inside of the main body into upper and lower parts, and a spiral baffle which is located on an upper surface of the body, and rotates and extends from a central portion to an edge of the body part to form a spiral channel.

3. The apparatus of claim 2, wherein the downcomer is located at the edge of the tray or the center of the tray, and the position is alternated along a height direction of the main body.

4. The apparatus of claim 2, wherein a width of the spiral channel is constant.

5. The apparatus of claim 1, wherein the supply part is formed in plurality to disperse and inject the distillation material.

6. The apparatus of claim 5, wherein the supply part is spaced at equal intervals along an inner circumference of the main body.

7. The apparatus of claim 1, wherein the plurality of trays are spaced at equal intervals along the height direction of the main body.

8. A method of removing residual monomers through the apparatus for removing residual monomers according to any one of claims 1 to 7, the method comprising:
injecting the distillation material into the main body;
supplying a gas to the distillation material to generate a distillation material from which a gaseous phase containing volatile materials and the volatile materials are removed; and
removing, from the main body, the distillation material from which the gaseous phase and the volatile materials are removed.

9. The method of claim 8, wherein the distillation material includes a polymerization product of suspension polymerization or emulsion polymerization.

10. The method of claim 9, wherein the distillation material includes a distillable vinyl chloride monomer (VCM).
